# EUROPÄISCHE PATENTSCHRIFT

(11) **EP 0 426 005 B1**
(45) Veröffentlichungstag und Bekanntmachung des Hinweises auf die Patenterteilung: **05.10.1994**
(21) Anmeldenummer: 90120462.8
(22) Anmeldetag: 25.10.1990
(51) Int. Cl.: E02F 3/40, E02F 3/627, E02F 3/36, E02F 3/38, E02F 9/14

(54) **Kupplungsrahmen**
Coupling frame
Structure d'accouplement

(30) Priorität: 31.10.1989 US 429593
(43) Veröffentlichungstag der Anmeldung: 08.05.1991
(73) Patentinhaber: DEERE & COMPANY, Moline, Illinois 61265 (US)
(72) Erfinder: Kaczmarczyk, Edward Ted, Welland, Ontario L3B 5N2 (CA)
(74) Vertreter: Feldmann, Bernhard

(56) Entgegenhaltungen:
- EP-A- 0 349 971
- FR-A- 2 542 049
- US-A- 3 254 780
- US-A- 3 718 222
- US-A- 4 643 631
- US-A- 4 813 163

## Beschreibung

Die Erfindung bezieht sich auf einen Kupplungsrahmen zur Aufnahme eines Arbeitswerkzeuges, der an einer Schwinge eines Arbeitsfahrzeuges um eine horizontale Querachse verkippbar anlenkbar ist und zwei seitliche vertikal gerichtete Tragstützen aufweist, die das Arbeitswerkzeug mit ihren oberen Enden aufnehmen können und über ein Querrohr miteinander verbunden sind.

Derartige Kupplungsrahmen dienen zum Schnellanbau von relativ schweren Arbeitswerkzeugen. Wegen der beim Einsatz auf sie auftreffenden Kräfte wurden sie in der Vergangenheit sehr massiv ausgebildet (US-A-3 876 091). Der Kupplungsrahmen, von dem die Erfindung ausgeht (US-A-4 812 103), ist bereits von leichterer Bauweise. Sein Querteil ist oberhalb der Kippachse, und zwar etwa im mittleren Bereich der Tragstützen, angeordnet. Bei unterschiedlich ausfahrenden Kippzylindern oder bei auf das Arbeitswerkzeug im Einsatz auftreffenden Kräften wird der Querteil verbogen, und der Kupplungsrahmen muß neu gerichtet oder sogar ersetzt werden. Bei nicht genau zueinander ausgerichteten Aufnahmeelementen der Schwinge läßt sich der Kupplungsrahmen nicht anbauen, es sei denn, es sind entsprechend große Toleranzen vorhanden, wodurch aber die einwandfreie Funktion und die Sicherheit behindert werden. Eine Verschikkung dieses Kupplungsrahmens im zerlegten Zustand ist nicht möglich.

Andererseits ist bereits ein Kupplungsrahmen vorgeschlagen worden (US-A-3 876 091), der vermutlich um eine horizontale Querachse verkippbar ist und der ein koaxial zu dieser Querachse angeordnetes Hohlteil aufweist, das an seitlichen Platten angeschweißt ist.

Die mit der Erfindung zu lösende Aufgabe wird darin gesehen, einen Kupplungsrahmen von leichter Bauweise derart auszubilden, daß er leicht an die Schwinge anbaubar und die Gefahr eines Verbiegens seines Querrohrs weitgehend vermieden ist.

Diese Aufgabe ist dadurch gelöst worden, daß das Querrohr koaxial zur Querachse angeordnet und mit Mitteln zum Anschluß an die beiden seitlichen Tragstützen derart versehen ist, daß zum Anschluß des Arbeitswerkzeuges eine begrenzte Relativbewegung der Tragstützen zueinander möglich ist. Dadurch, daß das Querrohr in der Kippachse des Kupplungsrahmens bzw. des daran angeschlossenen Arbeitswerkzeuges liegt, das eine Ladeschaufel, ein Räumgerät, eine Hebe- und Transportvorrichtung oder dergleichen sein kann, sind die Grundvoraussetzungen für einen einfachen Anbau geschaffen. Dabei macht die zugelassene Relativbewegung es möglich, daß der Versatz bei nicht genau zueinander ausgerichteten Teilen aufgefangen wird. Hinzu kommt, daß bei auf die Tragstützen von außen einwirkenden Kräften, beispielsweise dann, wenn das Arbeitswerkzeug mit einer Seite gegen ein Hindernis stößt, das Querrohr nicht mehr verbogen werden kann. Der Kupplungsrahmen ist damit weniger reparaturanfällig.

Nach einem weiteren Vorschlag der Erfindung soll das Querrohr mit seinen Tragstützen nicht dauerhaft verbunden, wie verschweißt sein, um bei eventuell auftretenden Beschädigungen Einzelteile leicht auswechseln zu können oder aber auch um den Kupplungsrahmen in Einzelteilen und gegebenenfalls in Bündeln anliefern zu können. Dies wird dadurch erreicht, daß das Querrohr mit Endteilen der Tragstützen leicht lösbar verbunden ist.

Sollte eine Relativbewegung über den zugelassenen Bereich auftreten, so wird eine größere Beschädigung erfindungsgemäß dadurch vermieden, daß das Querrohr mit den Endteilen der Tragstützen nachgiebig verbunden ist. Die nachgiebige Befestigung kompensiert die zu große Relativbewegung.

Zweckmäßig kann das Querrohr halbstarr ausgebildet sein.

Vorteilhaft weist nach einem weiteren Vorschlag der Erfindung die Befestigung des Querrohrs mit den Endteilen der Tragstützen eine Überlastsicherung auf, die anspricht, wenn eine Relativbewegung über den zugelassenen Bereich hinaus auftritt.

Eine einfache Überlastsicherung wird erreicht, wenn die Befestigung des Querrohrs mit den Endteilen der Tragstützen mindestens einen Scherbolzen aufweist, der derart eingesetzt ist, daß eine Relativbewegung der Tragstützen von einigen Graden möglich ist. Bei einer Relativbewegung über den zulässigen Bereich hinaus schert der Scherbolzen einfach ab. Der Kupplungsrahmen ist wieder einsatzfähig, wenn ein neuer Scherbolzen eingesetzt wird. Weitere Teile des Kupplungsrahmen sind nicht zu ersetzen. Der Anschluß über die Scherbolzen ermöglicht darüber hinaus eine kostengünstige Lieferung in Einzelteilen des Kupplungsrahmens und einen späteren einfachen Zusammenbau.

Im einzelnen kann für die Befestigung des Querrohres mit seinen Tragstützen nach der Erfindung weiter vorgesehen werden, daß jeder Endteil eine Buchse aufweist, in denen die beiden Enden des Querrohres aufgenommen und über je einen Scherbolzen befestigt sind. Die Buchsen können nach innen oder auch nach außen ragen und gleichzeitig als Lagerelemente für die Kipplagerung an der Schwinge dienen.

Fertigungsmäßig können die Enden des Querrohres zur Aufnahme der Scherbolzen je eine Bohrung aufweisen, die einen derart großen Durchmesser aufweisen, daß die Relativbewegung der Tragstützen möglich ist. Der Scherbolzen kann damit in dem Querrohr verkippen, wobei der Kippbereich die zugelassene Relativbewegung bestimmt. Wird der Kippbereich überschritten, schert der Scherbolzen ab.

Die Buchsen können eine weitere Funktion übernehmen, wenn sie in Fangausnehmungen an dem Arbeitswerkzeug eingreifen.

In der Zeichnung ist ein nachfolgend näher erläutertes Ausführungsbeispiel der Erfindung dargestellt. Es zeigt:
- Fig. 1: ein Arbeitsfahrzeug in Form eines Ackerschleppers mit angebautem Frontlader in Seitenansicht,
- Fig. 2: das vordere Ende des Frontladers ohne Arbeitswerkzeug in perspektivischer Ansicht,
- Fig. 3: einen an die Frontladerschwingen angeschlossenen Kupplungsrahmen und ein Arbeitswerkzeug in Form einer Ladeschaufel vor dem Anschluß,
- Fig. 4: eine ähnliche Darstellung wie in Fig. 3 in einer Zwischenphase des Anschlusses, in der der Kupplungsrahmen eine Anschlußstelle des Arbeitswerkzeuges untergreift,
- Fig. 5: eine weitere Zwischenphase des Anschlusses, in der Fangausnehmungen am Arbeitswerkzeug in Gegenteile am Kupplungsrahmen eingreifen,
- Fig. 6: das an den Kupplungsrahmen angeschlossene Arbeitswerkzeug,
- Fig. 7: eine ähnliche Darstellung wie in Fig. 6, jedoch mit einer anderen Verriegelungsvorrichtung, und
- Fig. 8: eine perspektivische Ansicht eines unteren Endes des Kupplungsrahmens mit einer Schervorrichtung.

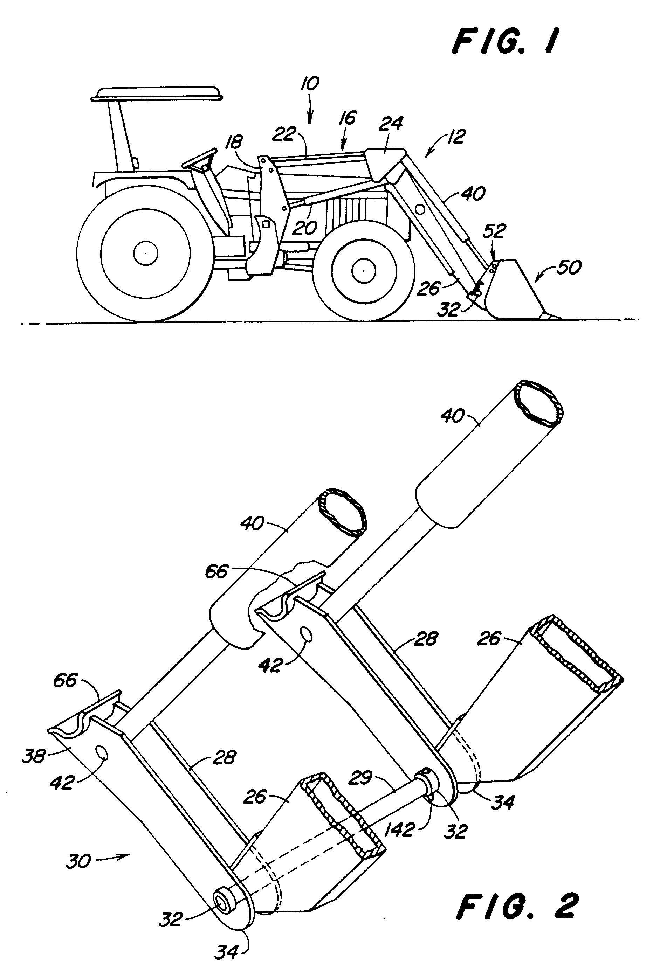

In Fig. 1 der Zeichnung ist ein Arbeitsfahrzeug 10 in Form eines Ackerschleppers mit einem angebauten, als Ladegerät ausgebildeten Arbeitsgerät 12 dargestellt. Das Ladegerät weist eine Schwinge 16 auf, die einenends an je einen an den Seiten des Ackerschleppers vorgesehenen Mastbaum 18 angelenkt ist. Über hydraulisch beaufschlagbare Arbeitszylinder 20 kann die Schwinge 16 in bekannter Weise um horizontale Achsen hochgeschwenkt werden. Die Schwinge 16 selbst besteht aus zwei mit gegenseitigem Querabstand angeordneten Auslegerarmen 22, die sich von den Mastbäumen 18 aus gesehen nach vorne bis zu je einem Kniestück 24 und von dort nach unten zu den vorderen Anschlußenden 26 der Schwinge erstrecken. Diese sind an Endteile 28 von Tragstützen derart gelenkig angeschlossen, daß die Tragstützen um eine horizontale Achse verkippbar sind. Die Tragstützen sind Bestandteil eines Kupplungsrahmens 30, weisen zueinander Querabstand auf, und ihre Endteile 28 sind miteinander über ein Querrohr 29 mit kreisförmigem Querschnitt verbunden. Das Querrohr 29 kann halbstarr ausgebildet sein und ist koaxial zu den Anschlußstellen des Kupplungsrahmens 30 an die Schwinge 16 bzw. zu der horizontalen Kippachse angeordnet. Wie die Anschlußstellen im einzelnen auszubilden sind, ist im Rahmen der Erfindung von untergeordneter Bedeutung. So können hierzu beispielsweise Buchsen 32 dienen, die mit den Endteilen 28 der Tragstützen verbunden sein können. Jedenfalls sollen die Endteile 28 kanalförmig ausgebildet sein mit unteren Enden 34, die über den Anschlußenden 26 offen sind. Jeder Endteil 28 geht in einen oberen Teil 38 mit einer sattelförmigen Aufnahme für das Arbeitswerkzeug über, wobei an den oberen Teilen 38 die kolbenseitigen Enden von Kippzylindern 40 an Anschlußstellen 42 angreifen, die damit oberhalb der Buchsen 32 liegen. Eine Druckbeaufschlagung der Kippzylinder 40 bewirkt ein Verschwenken des Kupplungsrahmens 30 um die Längsmittelachse des Querrohres, wodurch das Arbeitswerkzeug steuerbar ist. Das Querrohr 29 ermöglicht grundsätzlich eine gleichförmige Bewegung der beiden Tragstützen. Außerdem ist es so ausgebildet, daß beim Anbau des Kupplungsrahmens an die Schwinge 16 ein nicht ganz genaues Fluchten der Anschlußenden 26 der Auslegerarme 22 zueinander ausgeglichen werden kann, da die Befestigung des Querrohres 29 einen Versatz von einigen Graden auffängt. Da außerdem das Querrohr 29 koaxial zu der Kippachse des Kupplungsrahmens 30 angeordnet ist, werden nur Torsionslasten appliziert und keine oder fast keine Biegemomente, so daß ein dünnes Querrohr mit einem relativ kleinen Durchmesser verwendet werden kann.

Wie aus der Zeichnung hervorgeht, handelt es sich bei dem Ladegerät 12 um einen Frontlader, und das Arbeitswerkzeug 50 ist eine Ladeschaufel. Es versteht sich jedoch, daß auch andere Arbeitswerkzeuge, die an einer Schwinge befestigbar sind, Verwendung finden können.

Das Arbeitswerkzeug 50 oder die Ladeschaufel enthält eine Befestigungsvorrichtung, die insgesamt mit 52 bezeichnet ist und an den Kupplungsrahmen 30 derart angepaßt ist, daß eine stabile Halterung mit den Auslegerarmen 22 herstellbar ist.

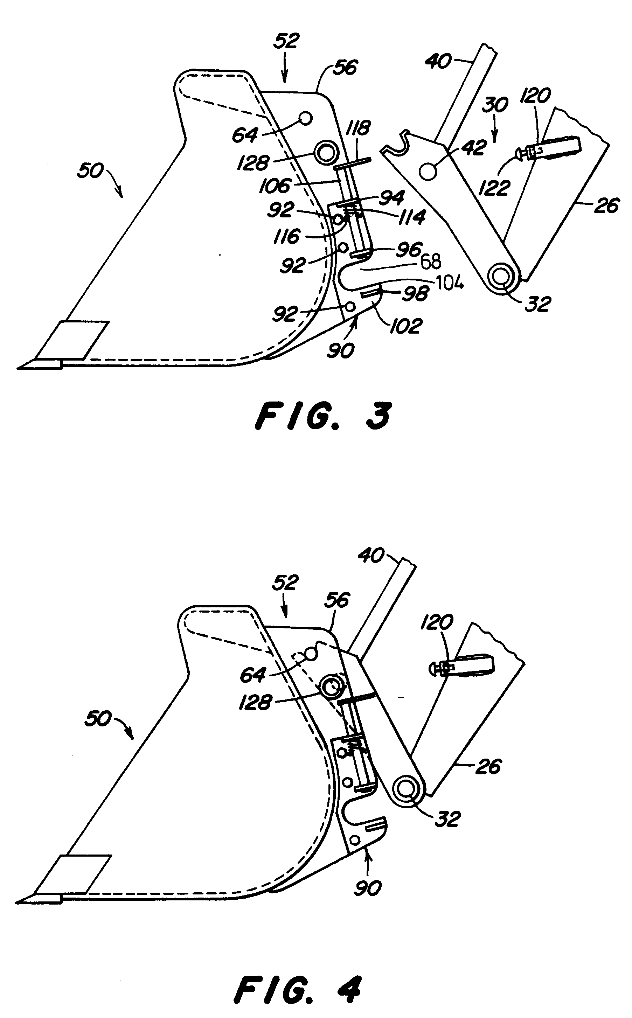

Die Befestigungsvorrichtung 52 enthält ein Paar quer beabstandeter, aufrecht ausgerichteter Befestigungskonsolen 56, die an der Rückwand der Ladeschaufel angebracht sind. Jede Befestigungskonsole 56 umfaßt zwei mit Querabstand angeordnete Platten, die nach hinten hin offen sind, um die zugehörigen Endteile 28 der Tragstützen aufnehmen zu können. In der Nähe des oberen Endes der Befestigungskonsolen 56 befindet sich jeweils ein quer verlaufender Bolzen 64 zwischen den Platten. Der obere Teil einer jeden Tragstütze weist eine sich nach oben öffnende U-förmige Abstützfläche oder einen Sattel 66 auf, die während der Montage (Fig. 4) den unteren Teil der Bolzen 64 aufnehmen. Beide Sättel 66 divergieren nach oben, so daß die Bolzen bei dem Anschluß des Kupplungsrahmens 30 an das Arbeitswerkzeug 50 leichter in die richtige Lage geführt werden können.

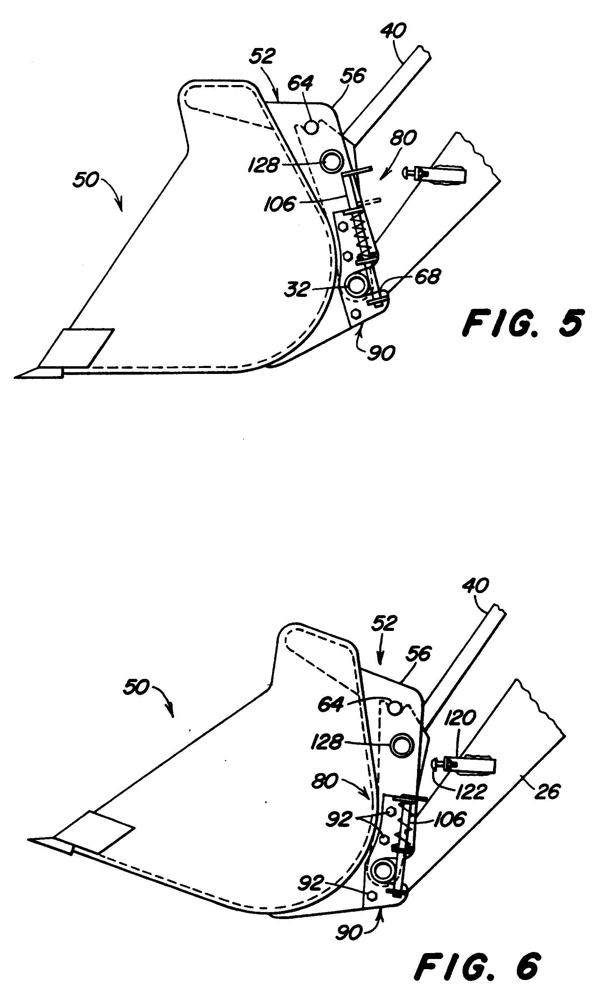

Nach hinten offene Fangausnehmungen, die sich in den unteren Bereichen der Befestigungskonsolen 56 befinden, sind so ausgebildet, daß sie die entsprechenden quer verlaufenden Teile der Buchsen 32 aufnehmen können, wenn die Endteile 28 der Tragstützen aus der in Fig. 4 dargestellten Lage in die in Fig. 5 dargestellte Stellung gelangen. Eine in Fig. 5 mit 80 bezeichnete Sicherungsvorrichtung ist an den Befestigungskonsolen 56 angebracht und dient zur automatischen Verriegelung des Arbeitswerkzeuges, wenn die Buchsen 32 in die Fangausnehmungen 68 gelangt sind.

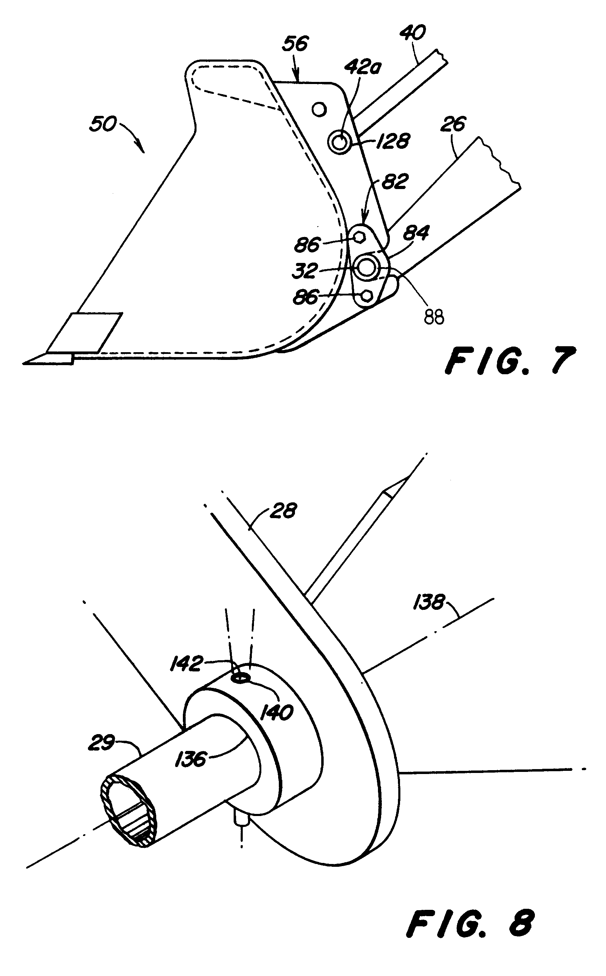

Alternativ hierzu zeigt Fig. 7 eine Sicherungsanordnung 82 für eine dauerhaftere Befestigung des Arbeitswerkzeuges, die Befestigungsplatten 84 enthält, welche durch Schrauben 86 an den Platten befestigt sind. Die Befestigungsplatten 84 weisen Öffnungen 88 auf. Die Verlängerungen der Buchsen 32 erstrecken sich durch die Öffnungen 88, wenn das Arbeitswerkzeug in seiner Befestigungslage gemäß Fig. 7 festgelegt wird. Wie ein Vergleich der Figuren 5 und 6 mit Fig. 7 zeigt, sind die Lagen der Buchsen 32 und der Anschlußstellen 42 bzw. 42a für beide Befestigungen identisch, so daß die wirksamen Abmessungen und die Besonderheiten des befestigbaren Arbeitsgerätes gleich bleiben können, und zwar unabhängig davon, welche Befestigungsart ausgewählt wird.

Wie aus den Figuren 3 bis 6 hervorgeht, enthält die Sicherungsvorrichtung 80 eine Schnellverriegelungseinrichtung 90, welche jeweils an die innere Platte jeder Befestigüngskonsole 56 durch drei Schrauben 92 angeschraubt ist. Jede Schnellverriegelungseinrichtung 90 weist einen oberen Halteteil 94, einen mittleren Halteteil 96 und einen unteren Halteteil 98 auf, welche mit einer Grundplatte 102 verbunden sind. Jede Grundplatte 102 ihrerseits ist durch die Schrauben 92 mit der jeweiligen Befestigungskonsole 56 verbunden. Die mittleren und unteren Halteteile 96 und 98 befinden sich auf sich gegenüberliegenden Seiten der Fangausnehmungen 68 und einer entsprechenden Fangausnehmung 104 in der Grundplatte 102.

Die Halteteile 94, 96 und 98 sind übereinander angeordnet und weisen zueinander fluchtende, quadratische oder rechteckige Öffnungen auf, welche je einen verschiebbaren, vierkantigen Verriegelungsbolzen 106 aufnehmen, die sich in vertikaler Richtung zwischen einer Lösestellung (Fig. 3 bis 5) und einer Einschnapp- oder unteren Verriegelungsstellung (Fig. 6) bewegen lassen. Jeder Verriegelungsbolzen 106 enthält in seinem mittleren Bereich eine sich nach hinten öffnende Einkerbung, welche in den oberen Halteteil 94 einrastet, wenn der Verriegelungsbolzen 106 seine Lösestellung einnimmt. Eine Schraubenfeder 114 umgibt den Verriegelungsbolzen 106 und ist zwischen einem Federrückhaltestift 116 und der unteren Fläche des oberen Halteteiles 94 eingespannt, um den Verriegelungsbolzen 106 in Richtung Verriegelungsstellung vorzuspannen. Durch leichte Bewegung des Verriegelungsbolzens 106 nach vorn tritt der obere Halteteil 94 aus der Einkerbung heraus, so daß sich der Verriegelungsbolzen 106 infolge der Vorspannungskraft der Feder 114 abwärts in die Verriegelungsstellung bewegt, in der er sich zwischen den mittleren und unteren Halteteil 96 und 98 schiebt und die Buchsen 32 in den Fangausnehmungen 68 sichert. Ein Griff 118 ist am oberen Ende eines jeden Verriegelungsbolzens 106 befestigt, um zu verhindern, daß der Verriegelungsbolzen 106 über seine Verriegelungsstellung hinausfährt, und um einen bequemen Angriff für eine Bedienungsperson zu bieten, die den Verriegelungsbolzen 106 mittels des Griffs 118 nach oben in die Lösestellung ziehen kann, um das Arbeitswerkzeug 50 zu lösen. Der Griff 118 dient auch als Teil des Einschnappmechanismus, durch den der Verriegelungsbolzen 106 automatisch in seine Verriegelungsstellung bewegt werden kann, wenn das Arbeitswerkzeug 50 mit den Auslegerarmen 22 verbunden ist. Die Verriegelungsbolzen 106 sind auf der Innenseite der Befestigungskonsolen 56 derart angeordnet, daß die Bedienungsperson leicht sehen kann, ob sich die Verriegelungsbolzen 106 in ihrer Lösestellung oder in der Verriegelungsstellung befinden.

Für ein automatisches Einschnappen des Verriegelungsbolzens 106 während der Montage ist je ein Ansatz 120 an den unteren Enden 34 der Auslegerarme 22 befestigt. Jeder Ansatz hat einen einstellbaren, den Verriegelungsbolzen 106 berührenden Teil 122. Dieser Teil 122 trifft auf den Griff 118 des Verriegelungsbolzens 106, wenn das Arbeitswerkzeug sich der in Fig. 6 dargestellten Position nähert. Der Teil 122 umfaßt eine Schraube, die in eine Mutter eingeschraubt ist, welche ihrerseits an dem vorderen Ende des Ansatzes 120 befestigt ist. Die Lage des Schraubenkopfes ist einstellbar (indem die Schraube in der Mutter verdreht wird), und wenn die Buchsen 32 sich in den Fangausnehmungen 68 befinden, werden bei der weiteren Bewegung die Schraubenköpfe die Griffe 118 berühren und die Verriegelungsbolzen 106 verschieben, wobei die oberen Halteteile 94 aus den Einkerbungen ausrasten. Danach schnellen die Verriegelungsbolzen 106 nach unten in die Verriegelungsstellung und halten die Buchsen 32 in den Fangausnehmungen 68 fest.

In den Platten der Befestigungskonsolen 56 sind Buchsen 128 angebracht. Wenn die halbdauerhafte Befestigungsanordnung gemäß Fig. 7 verwendet wird, wird jeder Kippzylinder 40 unmittelbar mit der entsprechenden Befestigungskonsole 56 durch das Durchstecken eines längeren Drehbolzens durch die Buchsen 128 und Ausnehmungen in den Stangenenden der Kippzylinder 40 verbunden.

Was den Kupplungsrahmen 30 anbelangt, so sind seine Tragstützen und insbesondere seine beiden Endteile 28 spiegelbildlich ausgebildet, so daß eine Beschreibung des rechten Teils des Kupplungsrahmens ausreichen sollte. Aus der Fig. 8 ist erkennbar, daß die innere Buchse 32 des Endteils 28 eine Innenbohrung 136 aufweist, deren Längsachse mit der Querachse 138, um die das Arbeitswerkzeug 50 mit dem Kupplungsrahmen 30 verkippbar ist, zusammenfällt. Der Durchmesser der Innenbohrung 136 ist zur Aufnahme des Querrohres 29 nur etwas größer als dessen Außendurchmesser. Die Buchse 32 ist mit einer Bohrung 140 versehen, die einen Scherbolzen 142 aufnehmen kann, der außerdem durch entsprechende Bohrungen in dem Querrohr 29 gesteckt wird. Aufgrund dieser Befestigung bewegt sich das Querrohrende grundsätzlich zusammen mit dem Endteil 28 um die Querachse 138, und der Querschnitt des Querrohres kann relativ klein gehalten werden, so daß Gewicht eingespart wird. Andererseits ist die Befestigung des Querrohres in den Buchsen so ausgelegt, daß die Endteile 28 sich um einige Grade unabhängig voneinander drehen können, bevor eine Verdrehung des Querrohres 29 einsetzen würde. Hierzu können die Bohrungen für die Scherbolzen 142 in den Enden des Querrohres etwas größer als der Außendurchmesser der Scherbolzen 142 ausgebildet sein, wodurch in einem begrenzten Bereich eine Relativdrehung der sich gegenüberliegenden Endteile 28 möglich wird, ohne daß das Querrohr dabei verdreht würde. Hierdurch wird auch die Montage erheblich erleichtert.

Aus der vorstehenden Beschreibung ist zu entnehmen, daß die Längsmittelachse des Querrohres 29 mit der Kippachse des Kupplungsrahmens 30 zusammenfällt, so daß eine Relativdrehung der beiden Endteile 28 über den begrenzten Bereich hinaus zu einer Verdrehung des Querrohrs führt und nicht zu einem Verbiegen. Sollte daher aus irgendeinem Grund eine äußere Kraft auf einen der Endteile einwirken, beispielsweise wenn dieses auf ein Hindernis stößt, wird jede Deformation des Kupplungsrahmens 30 hauptsächlich eine Drehbelastung an dem Querrohr 29 auslösen und kein Biegemoment.

Um den Kupplungsrahmen 30 weiter zu schützen, sind die Scherbolzen 142 vorgesehen, die abgeschert werden, wenn die Endteile eine Relativbewegung über den begrenzten Bereich hinaus ausführen. Die Scherbolzen 142 können entfernt werden, so daß der Kupplungsrahmen 30 auseinandergebaut werden kann bei anfallenden Reparaturen oder wenn einzelne Komponenten ersetzt werden sollen. Andererseits läßt es der Aufbau des Kupplungsrahmens 30 zu, daß er zu Versandzwecken auseinandergebaut verschickt werden kann.

Wird nun der Kupplungsrahmen in Einzelteilen geliefert, so muß er für den Einsatz zunächst zusammengebaut werden. Danach ist er mit den Endteilen 28 der Auslegerarme 22 zu verbinden, und die Kippzylinder 40 werden mit den Anschlußstellen 42 verbunden. Bei sich in ihrer Lösestellung befindlichen Verriegelungsbolzen 106 bewegt dann die Bedienungsperson das Arbeitsfahrzeug mit dem angeschlossenen Kupplungsrahmen 30 auf das Arbeitswerkzeug 50 zu (Fig. 3) und führt die Sättel 66 des Kupplungsrahmens unter die Bolzen 64 am Arbeitswerkzeug 50. Sollten Kupplungsrahmen 30 und Arbeitswerkzeug 50 nicht richtig zueinander ausgerichtet sein, dann können die Endteile 28 der Tragstützen eine Relativbewegung zueinander ausführen, so daß die Sättel 66 richtig unter den Bolzen 64 zu liegen kommen. Danach wird der Kupplungsrahmen 30 durch Einfahren der Kolbenstangen in die Kippzylinder zurückgezogen, wobei die Buchsen 32 in die Fangausnehmungen 68 eintreten. Kurz bevor die Buchsen 32 satt in den Fangausnehmungen 68 liegen, wird die Schnellverriegelungseinrichtung 90 ausgelöst, und die Buchsen werden in den Befestigungskonsolen 56 des Arbeitswerkzeuges gesichert. Damit ist das Arbeitswerkzeug 50 mit der Schwinge 16 fest verbunden. Um das Arbeitswerkzeug wieder abzubauen, muß die Bedienungsperson die Verriegelungsbolzen 106 wieder in ihre Lösestellung hochziehen, wonach die Kolbenstangen der Kippzylinder 40 auszufahren sind. Bei diesem Vorgang treten die Buchsen 32 aus den Fangausnehmungen 68 aus. Durch Absenken der Auslegerarme 22 werden auch die Bolzen 64 freigegeben, so daß das auf den Boden abgestellte Arbeitswerkzeug von den Schwingen wieder gelöst ist.

## Patentansprüche

1. Kupplungsrahmen (30) zur Aufnahme eines Arbeitswerkzeuges (50), der an einer Schwinge (16) eines Arbeitsfahrzeuges um eine horizontale Querachse (138) verkippbar anlenkbar ist und zwei seitliche vertikal gerichtete Tragstützen aufweist, die das Arbeitswerkzeug (50) mit ihren oberen Enden aufnehmen können und über ein Querrohr (29) miteinander verbunden sind, dadurch gekennzeichnet, daß das Querrohr (29) koaxial zur Querachse (138) angeordnet und mit Mitteln zum Anschluß an die beiden seitlichen Tragstützen derart versehen ist, daß zum Anschluß des Arbeitswerkzeuges (50) eine begrenzte Relativbewegung der Tragstützen zueinander möglich ist.

2. Kupplungsrahmen nach Anspruch 1, dadurch gekennzeichnet, daß das Querrohr (29) mit Endteilen (28) der Tragstützen leicht lösbar verbunden ist.

3. Kupplungsrahmen nach Anspruch 1, dadurch gekennzeichnet, daß das Querrohr (29) mit den Endteilen (28) der Tragstützen nachgiebig verbunden ist.

4. Kupplungsrahmen nach Anspruch 1, dadurch gekennzeichnet, daß das Querrohr (29) halbstarr ausgebildet ist.

5. Kupplungsrahmen nach Anspruch 1, dadurch gekennzeichnet, daß die Befestigung des Querrohrs (29) mit den Endteilen (28) der Tragstützen eine Überlastsicherung aufweist.

6. Kupplungsrahmen nach einem oder mehreren der vorherigen Ansprüche, dadurch gekennzeichnet, daß die Befestigung des Querrohrs (29) mit den Endteilen (28) der Tragstützen mindestens einen Scherbolzen (142) aufweist, der derart eingesetzt ist, daß eine Relativbewegung der Tragstützen von einigen Graden möglich ist.

7. Kupplungsrahmen nach einem oder mehreren der vorherigen Ansprüche, dadurch gekennzeichnet, daß jeder Endteil (28) eine Buchse (32) aufweist, in denen die beiden Enden des Querrohres (29) aufgenommen und über je einen Scherbolzen (142) befestigt sind.

8. Kupplungsrahmen nach Anspruch 7, dadurch gekennzeichnet, daß die Enden des Querrohres (29) zur Aufnahme der Scherbolzen (142) je eine Bohrung aufweisen, die einen derart großen Durchmesser aufweisen, daß die Relativbewegung der Tragstützen möglich ist.

9. Kupplungsrahmen nach Anspruch 7, dadurch gekennzeichnet, daß die Buchsen (32) in Fangausnehmungen (68) an dem Arbeitswerkzeug (50) eingreifen.

## Claims

1. A coupling frame (30) for receiving a working implement (50) which can be hinged to a pivoted boom (16) of a working vehicle to tilt about a horizontal transverse axis (138) and which comprises two side support posts aligned vertically, which can receive the working implement (50) at their upper ends and which are connected together by a transverse tube (29), characterized in that the transverse tube (29) is arranged coaxial with the transverse axis (138) and is so provided with means for attachment to the two side support posts that limited movement of the support posts relative to one another is possible for attachment of the working implement (50).

2. A coupling frame according to claim 1, characterized in that the transverse tube (29) is easily releasably connected to end parts (28) of the support posts.

3. A coupling frame according to claim 1, characterized in that the transverse tube (29) is connected yieldably to the end parts (28) of the support posts.

4. A coupling frame according to claim 1, characterized in that the transverse tube (29) is made semi-rigid.

5. A coupling frame according to claim 1, characterized in that the fixing of the transverse tube (29) to the end parts (28) of the support posts includes overload protection.

6. A coupling frame according to one or more of the preceding claims, characterized in that the attachment of the transverse tube (29) to the end parts (28) of the support posts comprises at least one shear pin (142), which is so fitted that relative movement of some degrees of the support posts is possible.

7. A coupling frame according to one or more of the preceding claims, characterized in that each end part (28) has a bush (32), in which bushes the two ends of the transverse tube (29) are received, each fixed by a shear pin (142).

8. A coupling frame according to claim 7, characterized in that the ends of the transverse tube (29) each have a bore for reception of the shear pin (142) which bore has such a large diameter that the relative movement of the support posts is possible.

9. A coupling frame according to claim 7, characterized in that the bushes (32) engage in catch recesses (68) in the working implement (50).

## Revendications

1. Structure d'accouplement pour recevoir un outil de travail (50), qui peut être articulée, avec possibilité de basculement autour d'un axe transversal horizontal (138), à une bielle oscillante (16) d'un véhicule de travail et qui présente deux montants porteurs latéraux, orientés verticalement, qui peuvent recevoir l'outil de travail (50) par leurs extrémités supérieures et sont mutuellement reliés par un tube transversal (29), **caractérisée** en ce que le tube transversal (29) est disposé coaxialement à l'axe transversal (138) et est pourvu de moyens pour le raccorder aux deux montants porteurs latéraux de telle sorte qu'on peut obtenir un déplacement relatif limité des montants porteurs l'un par rapport à l'autre en vue du raccordement de l'outil de travail (50).

2. Structure d'accouplement selon la revendication 1, **caractérisée** en ce que le tube transversal (29) est assemblé de manière aisément amovible à des parties terminales (28) des montants porteurs.

3. Structure d'accouplement selon la revendication 1, **caractérisée** en ce que le tube transversal (29) est assemblé de manière flexible aux parties terminales (28) des montants porteurs.

4. Structure d'accouplement selon la revendication 1, **caractérisée** en ce que le tube transversal (29) est réalisé semi-rigide.

5. Structure d'accouplement selon la revendication 1, **caractérisée** en ce que la fixation du tube transversal (29) aux parties terminales (28) des montants porteurs présente une sécurité contre la surcharge.

6. Structure d'accouplement selon l'une quelconque des revendications précédentes, **caractérisée** en ce que la fixation du tube transversal (29) aux parties terminales (28) des montants porteurs présente au moins un goujon de cisaillement (142), qui est mis en place de manière à permettre un mouvement relatif des montants porteurs de quelques degrés.

7. Structure d'accouplement selon l'une quelconque des revendications précédentes, **caractérisée** en ce que chaque partie terminale (28) présente une douille (32), les deux extrémités du tube transversal (29) étant reçues et fixées dans ces douilles au moyen d'un goujon de cisaillement respectif (142).

8. Structure d'accouplement selon la revendication 7, **caractérisée** en ce que les extrémités du tube transversal (29) présentent chacune, pour recevoir les goujons de cisaillement (142), un perçage qui présente un diamètre d'une grandeur permettant le mouvement relatif des montants porteurs.

9. Structure d'accouplement selon la revendication 7, **caractérisée** en ce que les douilles (32) s'engagent dans des évidements de blocage (68) prévus sur l'outil de travail (50).
